# EUROPÄISCHE PATENTSCHRIFT

(11) **EP 2 729 246 B1**
(45) Veröffentlichungstag und Bekanntmachung des Hinweises auf die Patenterteilung: **05.12.2018**
(21) Anmeldenummer: 12743911.5
(22) Anmeldetag: 04.07.2012
(51) Int. Cl.: B01J 20/22, B01J 20/28, B01J 20/32, B01J 20/02, C09K 5/04

(54) **VERFAHREN ZUR BESCHICHTUNG EINES BAUTEILS MIT EINER SCHICHT AUS METALLORGANISCHEM NETZWERK, MIT EINER SCHICHT AUS METALLORGANISCHEM NETZWERK BESCHICHTETER WÄRMETAUSCHER SOWIE VERWENDUNG DES WÄRMETAUSCHERS IN EINER SORPTIONSKÄLTEMASCHINE ODER SORPTIONSWÄRMEPUMPE**
METHOD FOR COATING A COMPONENT WITH A LAYER MADE OF A METAL-ORGANIC FRAMEWORK, HEAT EXCAHNGER COATED WITH A LAYER MADE OF A METAL-ORGANIC FRAMEWORK AND USE OF THE HEAT EXCHANGER IN A SORPTION COOLER OR A SORPTION HEAT PUMP
PROCÉDÉ POUR REVÊTIR UN ÉLÉMENT D'UNE COUCHE COMPOSÉE D'UN RÉSEAU ORGANOMÉTALLIQUE, ÉCHANGEUR DE CHALEUR REVÊTU D'UNE COUCHE COMPOSÉE D'UN RÉSEAU ORGANOMÉTALLIQUE AINSI QUE L'UTILISATION DUDIT ÉCHANGEUR DE CHALEUR DANS UN RÉFRIGÉRATEUR DE SORPTION OU DANS UNE POMPE À CHALEUR DE SORPTION

(30) Priorität: 05.07.2011 DE 102011106668
(43) Veröffentlichungstag der Anmeldung: 14.05.2014
(73) Patentinhaber: Fraunhofer Gesellschaft zur Förderung der angewandten Forschung E.V., 80686 München (DE)
(72) Erfinder: JEREMIAS, Felix, 79110 Freiburg (DE); HENNINGER, Stefan, 79346 Endingen (DE); JANIAK, Christoph, 79183 Waldkirch (DE)
(74) Vertreter: Pfenning, Meinig & Partner mbB
(86) Internationale Anmeldenummer: PCT/EP2012/062987
(87) Internationale Veröffentlichungsnummer: WO 2013/004726

(56) Entgegenhaltungen:
- EP-A2- 2 230 288
- WO-A1-2005/049892
- DE-A1-102009 047 201
- YEONSHICK YOO ET AL: "Rapid fabrication of metal organic framework thin films using microwave-induced thermal deposition", CHEMICAL COMMUNICATIONS, Nr. 21, 1. Januar 2008 (2008-01-01), Seiten 2441-2443, XP55039460, ISSN: 1359-7345, DOI: 10.1039/b800061a in der Anmeldung erwähnt
- Anonymous: "Entfettung", Römpp Lexikon, 1 March 2002 (2002-03-01), pages 1-1, XP055443199, Retrieved from the Internet: URL:https://roempp.thieme.de/roempp4.0/do/ data/RD-05-01201 [retrieved on 2018-01-22]

## Beschreibung

Erfindungsgemäß wird ein Verfahren zur zumindest bereichsweisen Beschichtung eines Bauteils mit einer Schicht aus einem metallorganischen Netzwerk (MOF) bereitgestellt, bei dem der Körper mit einer Lösung enthaltend mindestens ein Metallsalz (MOF-Precursor), mindestens einen Linker und mindestens ein Lösungsmittel in Kontakt gebracht wird. Der Linker kann hierbei die Bindung der MOF-Schicht an die Oberfläche des Bauteils und/oder den Aufbau der MOF-Schicht vermitteln. Das Verfahren ist dadurch gekennzeichnet, dass die Lösung einen Temperaturgradienten aufweist, wobei die Temperatur der Lösung unmittelbar an der Oberfläche des Bauteils unter Verwendung von mindestens einem Temperaturfühler auf eine Temperatur in dem Bereich von 50 bis 200°C eingestellt wird, so dass die Kristallisation einer MOF-Schicht auf der Oberfläche ermöglicht wird, während die Temperatur der restlichen Lösung 10 bis 100 K unter der Temperatur der Oberfläche des Bauteils konstant gehalten wird, so dass die Bildung von MOF-Kristallen in der restlichen Lösung verhindert wird, wobei das Bauteil mittels einer Entfettung vorbehandelt wird. Das Verfahren kann für die Herstellung von Bauteilen mit Schichten bestimmter chemischer und/oder physikalischer Eigenschaften verwendet werden. Darüberhinaus umfasst die Erfindung Wärmetauscher für eine Sorptionskältemaschine oder Sorptionswärmepumpe, hergestellt nach dem erfindungsgemäßen Verfahren, dadurch gekennzeichnet, dass die MOF-Schicht eine Dicke von 5 bis 100 µm aufweist. Außerdem betrifft die vorliegende Erfindung die Verwendung des Wärmetauschers in einer Sorptionskältemaschine oder einer Sorptionswärmepumpe.

Metallorganische Netzwerke (metal-organic frameworks, MOFs oder Koordinationspolymere) sind für die Beschichtung von Bauteilen geeignet. Für bestimmte Anwendungen ist es von Vorteil, wenn sich das Beschichtungsmaterial in gutem thermischen Kontakt mit dem Bauteil befindet. Dies kann z.B. durch ein Beschichtungsverfahren realisiert werden, bei dem das pulverförmige, etwa durch Hydrothermalsynthese gewonnene MOF mit einem Binder vermengt und auf das Bauteil aufgebracht wird. Mit diesem Beschichtungsvorgang ist ein zusätzlicher Arbeitsschritt nötig, und notwendige Eigenschaften des Binders, wie Wasserdampfpermeabilität, Wärmeleitfähigkeit oder Langzeitstabilität, müssen garantiert werden. Dies führt zu zusätzlichem Entwicklungs- und Materialaufwand.

Im Idealfall wird die MOF-Schicht in einem einzigen Arbeitsgang aus den molekularen Vorstufen direkt auf das Bauteil aufgebracht. Die Anforderungen an den Beschichtungsvorgang sind im Einzelnen:
1. Vermeidung aufwändiger Synthesebedingungen, wie z.B. Schutzatmosphäre oder Überdruck
2. Feste Haftung der Schicht am Bauteil (= Trägermaterial)
3. Variabilität: Möglichkeit verschiedener Kombination MOF/Trägermaterial.
4. Trägermaterial soll möglichst ohne vorhergehende Modifikationen (z.B. Vorbeschichtungen) einsetzbar sein.

Ein Beschichtungsvorgang, der die o.g. Bedingungen erfüllt, kann auch für die Anwendung von MOFs für die Gasspeicherung (z.B. Wasserstoffspeicherung), Sensorik und insbesondere in der heterogenen Katalyse geeignet sein.

Um ein Bauteil mit einer mikroporösen Schicht zu versehen wird im Stand der Technik beispielweise das Bauteil (z.B. ein Wärmetauscher) in einen Autoklaven mit einer Hydrothermalmischung für die Zeolithsynthese eingebracht und sodann die Suspension beheizt. Die Kristallisation des Zeolithen als Schicht auf dem Bauteil wird durch einen Unterschuss an der Metallkomponente in der Synthesemischung erzielt: Die Suspension für die Hydrothermalsynthese enthält anteilig weniger Metallkationen, als für die Bildung des Zeolithen gemäß seiner stöchiometrischen Summenformel erforderlich ist. Die fehlende Menge an Metallkationen kann nur durch das Bauteil bereitgestellt werden, welches während der Hydrothermalsynthese in irgendeiner Form oxidiert wird. Weil hierbei das Bauteil zu einem wesentlichen Anteil aus dem entsprechenden Metall bestehen muss und Legierungselemente die Eigenschaften der sich bildenden Zeolithschicht bedeutend verändern können, schränkt dieses Verfahren die Wahl des Bauteils deutlich ein.

MOF-Filme für die Anwendung in Sensorik oder Katalyse sind ein wichtiges aktuelles Forschungsthema (Shekhah, O. et al., Chemical Society Reviews (2011); Zacher, D. et al., Chemical Society reviews 38, 1418-29). Aufgrund ihrer Komplexität, Anforderungen an das zu beschichtende Substrat oder Eigenschaften der erzeugten Schicht sind bisherige Verfahren für die Beschichtung bestimmter Bauteile, wie beispielsweise Wärmetauscher, ungeeignet.

Die bislang bekannten Verfahren zur MOF-Aufkristallisation lassen sich in zwei Gruppen zusammenfassen:
1. Stufenweises Wachstum durch abwechselnde Cluster/Linker-Exposition: Die zu beschichtende Oberfläche eines Bauteils wird mit Ankergruppen versehen und dann abwechselnd Lösungen aus MOF-Salzlösung und Linkermolekül ausgesetzt (Shekhah, O. et al., Journal of the American Chemical Society 129, 15118-9). Da für die Ausbildung jeder einzelnen Kristallebene mehrere Arbeitsgänge erforderlich sind, eignet sich das Verfahren nur für sehr dünne Schichten.
2. Synthese aus der solvothermalen Mutterlösung. Dieses Prinzip ist besser untersucht. Um die Bildung des MOFs an der zu beschichtenden Oberfläche bevorzugt im Vergleich zur freien Lösung anzuregen, wurden verschiedene Verfahren entwickelt, die im folgenden Abschnitt vorgestellt werden. Gemeinsam allen bisher bekannten Verfahren ist, dass zur Haftung der Schicht auf dem Substrat keine Daten vorliegen.

Die bevorzugte Kristallisation der MOF-Schicht an der Oberfläche des Bauteils wird dadurch erreicht, dass die Oberfläche des Bauteils mit Gruppen, die an das MOF binden (i.d.R. Linkergruppen), funktionalisiert wird. Dadurch kann die Oberfläche als Kristallisationskeim wirken.

Am weitesten entwickelt ist hier die Modifikation durch SAMs (self-assembled monolayers): Die zu beschichtende Oberfläche wird zunächst vergoldet, dann mit carboxylfunktionalisierten SAMs modifiziert und schließlich der Solvothermalsynthese unterworfen (Scherb, C. et al, Journal of Materials Chemistry 20, 3046) oder mit einem amorphen Proto-MOF überzogen (Schoedel, A. et al., Angewandte Chemie Int. ed. in English 49, 7225-8).

Das MOF kristallisiert dann bevorzugt an die Ankergruppen auf der Oberfläche auf. Diese Methode weist jedoch eine Reihe an Nachteilen auf. Zum einen ist eine Vergoldung und SAM-Beschichtung der Oberfläche des Bauteils notwendig. Zum anderen ist die Synthese der SAM-Linker verhältnismäßig komplex. Letztlich ist auch die Bindung der SAM zu Gold labil d.h. nur für dünne MOF-Schichten gut geeignet. Zusammengefasst ist die SAM-Methode für eine Vielzahl an Bauteilen (z.B. Wärmetauscher) unverhältnismäßig aufwändig.

Centrone et al. beschichteten keine Bauteile, sondern Fasern aus Polyacrylnitril, die durch Hydrolyse mit freien COOH-Gruppen versehen waren. Die Beschichtung erfolgte durch direkte Hydrothermalsynthese und unter Umgehung des Gold/SAM-Weges mit MIL-47 (Centrone, A. et al., Journal of the American Chemical Society 132, 15687-91). Diese Methode erfordert aber carboxylfunktionalisierte Substrate bzw. Bauteile. Dies ist für organische Substanzen wie Aktivkohle oder viele Polymere verhältnismäßig einfach zu erreichen, aber beispielsweise für Bauteile aus Metall nicht möglich.

Im Stand der Technik ist die Herstellung sehr dünner Filme von HKUST-1 auf Kupfer offenbart. Die Filme wurden hergestellt, indem eine sorgfältig polierte Kupferplatte zur Hydrothermalsynthese dazugegeben wurde (Liu, J. et al., Journal of Materials Chemistry 21, 3775). Dieser Prozess hat jedoch wesentliche Nachteile. Zum einen hat diese Methode einen hohen Verlust an frei entstehendem MOF, da die MOF-Bildung nicht auf die Oberfläche der Kupferplatte begrenzt ist. Zum anderen ist bei diesem Verfahren eine geringe Aufbaurate (1 µm in 24 h) zu verzeichnen. Letztendlich ist die Substratpräparation aufwändig und es muss unter Schutzgasatmosphäre gearbeitet werden.

Im Stand der Technik ist auch die Kristallisation von MOFs auf Substraten beschrieben, die keine spezifischen Linker besitzen. Die Komplexbildung erfolgt dann durch OH-Gruppen auf der Substratoberfläche, etwa im Fall von MOF-5 auf durch Atomlagenepitaxie auf Silicium aufgebrachtem Al₂O₃ (Hermes, S. et al., Chemistry of materials 19, 2168-2173). Auch hier ergeben sich Nachteile wie eine hohe Anforderung an die Substratpräparation (Si-Einkristallwafer, Atomlagenabscheidung von Al₂O₃), geringe Wachstumsraten (0,5 - 1 µm/h) und die Bildung von freiem MOF aus der Stammlösung.

Ferner ist im Stand der Technik die Beschichtung eines Substrates mithilfe von Mikrowellenstrahlung beschrieben. Auf ein elektrisch nicht leitfähiges Substrat wird eine dünne Schicht einer elektrisch leitfähigen Substanz aufgetragen und das Präparat in die solvothermale Stammlösung gegeben. Durch Mikrowelleneinstrahlung werden in der leitfähigen Schicht Wirbelströme erzeugt, die eine lokale Erhitzung hervorrufen und dadurch die Kristallbildung hier bevorzugt initiieren. Im Stand der Technik wird das Verfahren erfolgreich angewandt für MOF-5 auf mit Graphit, Leitruß oder Gold beschichtetem α-Al₂O₃ (Yoo, Y. & Jeong, H.-K., Chemical communications, Cambridge, England 2441-3). Auch dieses Verfahren ist mit Nachteilen behaftet. Für MOF-Synthesen sind grundsätzlich hochpolare Lösungsmittel nötig, also Lösungsmittel, die hohe Dielektrizitätskonstanten und damit eine starke Mikrowellenempfindlichkeit besitzen. Deswegen findet bei diesem Verfahren immer auch eine Erhitzung des Lösungsmittels und damit die unerwünschte Bildung von MOF aus der Lösung statt. Zweitens ist unklar, ob das Verfahren auch für dicke, womöglich massiv metallene Substrate geeignet ist. Drittens muss die Geometrie des Substrats bzw. Bauteils gewissen Vorgaben bezüglich ihrer Antennenwirkung entsprechen, was zu Einschränkungen bei der Gestaltung der Geometrie des Substrates bzw. Bauteils führen kann. Letztendlich erfordert dieses Verfahren eine Mikrowellenanlage, welche ebenfalls einschränkend auf die Geometrie des zu beschichtenden Bauteils wirken kann und mit hohen Anschaffungskosten verbunden ist.

Eine weitere Methode aus dem Stand der Technik, die Bildung von MOFs nur in der Grenzschicht der zu beschichtenden Oberfläche zu ermöglichen, beruht auf der Ausnutzung des Konzentrationsgradienten eines MOF-Bausteins. Dieser wird dadurch erzeugt, dass anstatt der MOF-Stammlösung, die aus Metallsalz und Linker besteht, nur eine Linkerlösung eingesetzt wird. Die zur MOF-Bildung erforderlichen Metallionen werden durch anodische Oxidation der zu beschichtenden Oberfläche erzeugt, sodass nur in deren Nähe eine ausreichende Konzentration an Metallionen für die MOF-Bildung befindet (Meek, B.S.T. et al., Advanced Materials XX, 1-19; Ameloot, R. et al., Chemistry of Materials 21, 2580-2582; Mueller, U. et al., Journal of Materials Chemistry 16, 626; WO 2005/049892 A1 und US 2009/0169857). Diese Methode hat den Nachteil, dass das Schichtwachstum begrenzt ist, weil die MOF-Schicht elektrisch isolierend wirkt. Ferner wird während der Schichtbildung die Substratoberfläche angelöst, wodurch die Haftung der Schichten mangelhaft ist. Letztendlich ist die fixe Kombination aus Substrat-Metall und MOF-Metallion problematisch. Besonders für die Verwendung von Legierungen wie z.B. Edelstahl sind Einschränkungen zu erwarten.

Bei einer weiteren Beschichtungsmethode aus dem Stand der Technik erfolgt die Erzeugung von MOF-Schichten durch sekundäres Wachstum. Hierbei wird das Substrat zunächst mit MOF-Saatkristallen beschichtet. Dies kann z.B. durch Beschichten mit einer Suspension (Gascon, J. et al., Microporous and Mesoporous Materials 113, 132-138; Li, Y.-S. et al., Angewandte Chemie Int. ed. in English 49, 548-51) oder durch Eindampfen einer solvothermalen Stammlösung (Ameloot, R. et al., Advanced materials 22, 2685-8; Guerrero, V.V. et al., Journal of Materials Chemistry 20, 3938) auf der Oberfläche erfolgen (nur für leicht zu bildende MOFs geeignet). Durch die folgende Solvothermalsynthese wird diese Schicht durch weitere Aufkristallisation verstärkt. Als Nachteile ist zu nennen, dass ein zusätzlicher Arbeitsschritt durch die Vorbeschichtung (Auftragen von Saatkristallen) erforderlich ist. Es ergibt sich hieraus eine weitere Fehlerquelle, welche den Fachmann über die (lokale) Schichthaftung im Unklaren lässt. Ferner ist auch dieses Verfahren mit geringen Schichtaufbauraten behaftet.

Weiterhin ist aus der EP 2 230 288 A2 die Verwendung von Substraten in Adsorptions-Kälte/Wärmemodulen bekannt. Auf diese Substrate werden zuvor in separaten Verfahren hergestellte MOFs durch Beschichten aufgebracht.

Es war daher Aufgabe der vorliegenden Erfindung, ein Verfahren zur Beschichtung von Bauteilen mit einer Schicht aus einem metallorganischen Netzwerk (MOF) bereitzustellen, mit welchem in kurzer Zeit und mit wenig Aufwand ein Bauteil hergestellt werden kann, welches eine MOF-Schicht mit hoher Haftung und hoher Schichtdicke aufweist.

Die Aufgabe ist gelöst durch das Verfahren zur zumindest bereichsweisen Beschichtung eines Bauteils gemäß Anspruch 1, dem Wärmetauscher für eine Sorptionskältemaschine oder Sorptionspumpe gemäß Anspruch 11und der Verwendung des Wärmetauschers gemäß Anspruch 12. Die weiteren abhängigen Ansprüche zeigen vorteilhafte Weiterbildungen.

Die vorliegende Erfindung beschreibt ein Verfahren zur zumindest bereichsweisen Beschichtung eines Bauteils mit einer Schicht aus einem metallorganischen Netzwerk (MOF), bei dem der Körper mit einer Lösung enthaltend mindestens ein Metallsalz (MOF-Precursor), mindestens einen Linker und mindestens ein Lösungsmittel in Kontakt gebracht wird, dadurch gekennzeichnet, dass die Lösung einen Temperaturgradienten aufweist, wobei die Temperatur der Lösung unmittelbar an der Oberfläche des Bauteils unter Verwendung von mindestens einem Temperaturfühler auf eine Temperatur in dem Bereich von 50 bis 200°C eingestellt wird, so dass die Kristallisation einer MOF-Schicht auf der Oberfläche des Bauteils ermöglicht wird, während die Temperatur der restlichen Lösung 10 bis 100 K unter der Temperatur der Oberfläche des Bauteils konstant gehalten wird, so dass die Bildung von MOF-Kristallen in der restlichen Lösung verhindert wird, wobei das Bauteil mittels einer Entfettung vorbehandelt wird. Der Linker kann hierbei die Bindung der MOF-Schicht an die Oberfläche des Bauteils und/oder den Aufbau der MOF-Schicht vermitteln d.h. an der Haftung am Bauteil und/oder Bildung der MOF-Schicht wesentlich beteiligt sein.

Das erfindungsgemäße Verfahren hat folgende Vorteile:
1. Hohe Abscheidungsraten (beispielsweise 12 µm/h für HKUST-1 auf Kupfer, bei stärkerer Heiz- und Kühlleistung sind auch höhere Raten denkbar);
2. Außer Entfettung keine Vorbehandlung des Bauteils erforderlich;
3. Bauteilgeometrie frei wählbar;
4. Große Auswahl an Bauteilen möglich;
5. Synthese bei Normaldruck grundsätzlich möglich.

Darüberhinaus kann das erfindungsgemäße Verfahren zusätzlich zu Beschichtungsverfahren aus dem Stand der Technik verwendet bzw. in diese integriert werden, wodurch sich eine Verbesserung besagter Beschichtungsverfahren ergeben kann und/oder das Anwendungsspektrum solcher Verfahren verbreitert werden kann.

Erfindungsgemäß kann das Bauteil im Wesentlichen ein Element aus der Gruppe bestehend aus Metall, Metalllegierung, Metalloxid, Metalloxidkeramik, Nichtmetalloxidkeramik, bevorzugt Siliziumkarbid, Gläser, Halbmetalle, Legierungshalbleiter und Silizium enthalten oder daraus bestehen, insbesondere Kupfer, Aluminium und/oder rostfreie Stähle, bevorzugt Stähle der Typen 1.4301 und/oder 1.4401.

In einer bevorzugten Ausführungsform des erfindungsgemäßen Verfahrens bildet der MOF-Precursor ein
a) Metallorganisches poröses Gerüstnetzwerk (MOF) aus einem Metall und/oder Halbmetall des Periodensystems, bevorzugt ein MOF der Elemente der Gruppen 2, 3, 4, 5, 6, 7, 8, 9, 10, 11, 12, 13, 14, 15 und/oder der Lanthanoide des Periodensystems, besonders bevorzugt ein Cu-, Cr-, Al-, Fe-, Ti-, Zr- oder Zn-MOF;
b) Zeolithisches Imidazolnetzwerk (ZIF);
aus.

Das im Folgenden vorgestellte, erfindungsgemäße Prinzip der thermischen Abscheidung von MOFs beruht auf der lokalen Einschränkung der Kristallisation durch einen Temperaturgradienten.

Die Lösung der mindestens einen MOF-Komponente wird hierbei durch das zu beschichtenden Bauteil lokal beheizt. Der zentrale Punkt ist hierbei, dass die Erhitzung der Lösung lediglich lokal an der Grenzfläche von Bauteil und Lösung (z.B. an der Oberfläche des zu beschichtenden Bauteils) erfolgt. Um diesen Effekt zu verstärken kann die Lösung von außen gekühlt werden.

Folglich ist nur an der Grenzfläche des zu beschichtenden Bauteils (z.B. der Oberfläche des Bauteils) die Temperatur ausreichend hoch für die Bildung des MOF. Hierbei kann die Bildung des MOF durch die thermische Deprotonierung des Linkers oder die Zersetzung des Lösungsmittels DMF initiiert werden.

In einer bevorzugten Ausführungsform der Erfindung ist der Linker mindestens eine wenigstens zweizähnige organische Verbindung. Der Linker kann mindestens eine funktionelle Gruppe enthalten, welche in der Lage ist, zu mindestens zwei Metallionen mindestens zwei koordinative Bindungen auszubilden.

Hierbei kann die mindestens eine funktionelle Gruppe ausgewählt sein aus der Gruppe bestehend aus COOH, CS₂H, NO₂, B(OH)₂ und SO₃H.

In einer besonders bevorzugten Ausführungsform handelt es sich bei dem Linker um einen Stickstoff-Heterozyklus, bevorzugt ausgewählt aus der Gruppe bestehend aus Pyrazolat, Triazolat, Tetrazolat, Imidazolat, Pyrimidin, Pyridazin und Pyrazin, ein aliphatisches oder aromatisches Amin und/oder ein Phosphan.

Besonders bevorzugt ist der Linker ausgewählt aus der Gruppe bestehend aus Terephthalsäure, Isophtalsäure, Hydroxyterephthalsäure, 2,5-Dihydroxyterephthalsäure, Aminoterephthalsäure, Pyridin-2,5-Dicarbonsäure, Pyrazin-2,5-dicarbonsäure, 1,3,5-Benzoltricarbonsäure, Fumarsäure und 2,3-Dihydroxyfumarsäure, sowie deren Anionen.

Die Temperatur des Bauteils und/oder der Lösung wird während des Verfahrens mithilfe eines Temperaturfühlers überwacht.

In einer erfindungsgemäßen Ausführungsform wird die Temperatur an der Oberfläche des Bauteils über eine Temperiervorrichtung eingestellt, wobei die Temperiervorrichtung bevorzugt ein elektrisches Heizelement und/oder ein Wärmeträgerfluid enthält. In einer bevorzugten Ausführungsform durchströmt das Wärmeträgerfluid das Bauteil aktiv.

Erfindungsgemäß kann die Leistung des elektrischen Heizelements (z.B. einer Heizpatrone) schrittweise erhöht werden, bis die von einem Thermometer (z.B. ein Thermoelement) gemessene Außenwandtemperatur T_{K} der Temperatur der literaturbekannten Solvothermalsynthese entspricht.

Bevorzugt wird die Temperatur an der Oberfläche des Bauteils auf eine Temperatur in dem Bereich 70-170°C, bevorzugt 88°C-150°C, eingestellt und/oder die die Temperatur der Lösung 20-70 K, besonders bevorzugt 30-50 K unter der Temperatur der Oberfläche des Bauteils konstant gehalten.

Die Temperatur der Solvothermalsynthese kann dann für Minuten bis mehrere Stunden (z.B. 15 oder 30 Minuten, 1 oder 2 Stunden) konstant gehalten werden. Hat sich eine bestimmte Schichtdicke gebildet kann ein Isolationseffekt auftreten und ein messbarer Temperaturanstieg zu verzeichnen sein.

In einer besonders bevorzugten Ausführungsform wird die Temperatur der restlichen Lösung durch eine Kühlvorrichtung, bevorzugt ein Kryostat und/oder ein Eis-Wasser-Bad eingestellt. Dadurch wird ein Erwärmen der Lösung außerhalb der Grenzfläche zwischen Lösung und Bauteil vermindert bzw. ganz verhindert und dadurch die MOF-Bildung lokal auf die Grenzfläche beschränkt.

Das Bauteil kann vor Beginn des Verfahrens, d.h. vor dem Kontakt mit der Lösung gereinigt werden, bevorzugt mit Aceton und/oder verdünnter Salzsäure.

Erfolgt eine Reinigung, kann nach der Reinigung getempert werden, bevorzugt bei einer Temperatur von 100-140°C für 12-36 Stunden, besonders bevorzugt bei einer Temperatur von 110-130°C für 20-28 Stunden.

In einer weiteren Ausgestaltungsform der Erfindung kann das Bauteil vor dem Kontakt mit der MOF-bildenden Lösung funktionalisiert werden, bevorzugt mit einer selbstorganisierenden Monoschicht (SAM).

Die Erfindung bezieht sich auch auf einen Wärmetauscher für eine Sorptionskältemaschine oder Sorptionswärmepumpe, hergestellt nach dem erfindungsgemäßen Verfahren, welcher eine Dicke von 5 bis 100 µm aufweist..

Der Wärmetauscher kann im Wesentlichen ein Element aus der Gruppe bestehend aus Metall, Metalllegierung, Metalloxid, Metalloxidkeramik, Nichtmetalloxidkeramik, bevorzugt Siliziumkarbid, Gläser, Halbmetalle, Legierungshalbleiter und Silizium enthalten oder daraus bestehen, insbesondere Kupfer, Aluminium und/oder rostfreie Stähle, bevorzugt Stähle der Typen 1.4301 und/oder 1.4401.

Erfindungsgemäß kann die MOF-Schicht auf dem Wärmetauscher im Wesentlichen ein
a) Metallorganisches poröses Gerüstnetzwerk (MOF) aus einem Metall und/oder Halbmetall des Periodensystems, bevorzugt ein MOF der Elemente der Gruppen 2, 3, 4, 5, 6, 7, 8, 9, 10, 11, 12, 13, 14, 15 und/oder der Lanthanoide des Periodensystems, besonders bevorzugt ein Cu-, Cr-, Al-, Fe-, Ti-, Zr- oder Zn-MOF;
b) Zeolithisches Imidazolnetzwerk (ZIF);
enthalten oder daraus bestehen.

In einer bevorzugten Ausgestaltungsform der Erfindung weist die MOF-Schicht des Bauteils
a) eine Dicke von 11-100 µm, insbesondere 10-50 µm, besonders bevorzugt 20-30 µm; und/oder
b) Makroporen von ca. 1-10 µm, bevorzugt 2-8 µm, besonders bevorzugt 4-6 µm Durchmesser;
auf.

Ferner enthält die MOF-Schicht mindestens eine wenigstens zweizähnige organische Verbindung enthalten. Die mindestens eine wenigstens zweizähnige organische Verbindung kann mindestens eine funktionelle Gruppe aufweisen.

Hierbei kann die mindestens eine funktionelle Gruppe ausgewählt sein aus der Gruppe bestehend aus COOH, CS₂H, NO₂, B(OH)₂ und SO₃H.

In einer besonders bevorzugten Ausgestaltungsform der Erfindung handelt es sich bei der mindestens einen wenigstens zweizähnigen organischen Verbindung um einen Stickstoff-Heterozyklus, bevorzugt ausgewählt aus der Gruppe bestehend aus Pyrazolat, Triazolat, Tetrazolat, Imidazolat, Pyrimidin, Pyridazin und Pyrazin, ein aliphatisches oder aromatisches Amin und/oder ein Phosphan.

Der erfindungsgemäße Wärmetauscher kann zumindest bereichsweise porös sein. Dieser wird in einer Sorptionskältemaschine oder einer Sorptionswärmepumpe verwendet.

Zur Herstellung des Wärmtauschers wird das erfindungsgemäße Verfahren herangezogen.

Das erfindungsgemäße Verfahren kann ferner verwendet werden zur Beschichtung von Bauteilen mit katalytisch aktiven Schichten, lumineszierenden Schichten, magnetischen Schichten, Schichten für die analytische Gastrennung und/oder Schichten für die kontinuierliche Gas- oder Flüssigkeitstrennung.

Anhand der folgenden Figuren und Beispiele soll der erfindungsgemäße Gegenstand näher erläutert werden, ohne diesen auf die hier dargestellten spezifischen Ausführungsformen einschränken zu wollen.
Figur 1 zeigt eine Skizze zum erfindungsgemäßen Beschichtungsverfahren.
Figur 2 zeigt eine Aufnahme einer durch direkte thermische Abscheidung erzeugten HKUST-1 MOF-Schicht auf einem Zylinder aus Kupfer.
Figur 3 zeigt einen Vergleich des Röntgendiffrakto-gramms der erzeugten HKSUT-1-MOF-Schicht mit einer Simulation für HKUST-1.
Figur 4 zeigt SEM-Aufnahmen der HKUST-1-Schicht (Cu-btc), welche auf dem Kupferträger abgeschieden wurde.

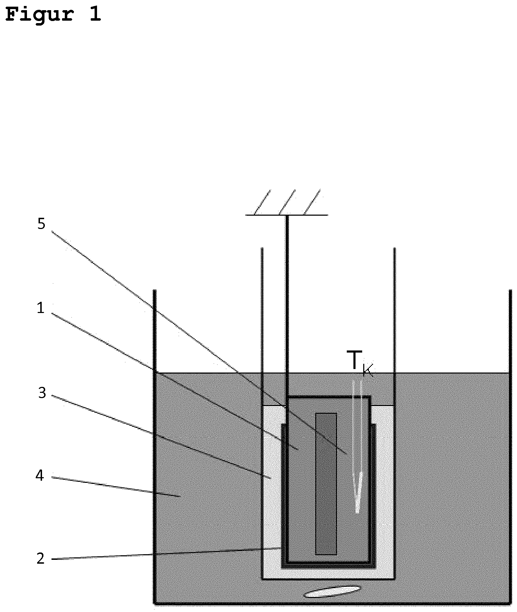

Figur 1 zeigt eine Vorrichtung, welche zur Beschichtung eines Bauteils 1 geeignet ist. Anhand der Vorrichtung kann eine Ausführungsform des erfindungsgemäßen Verfahrens illustriert werden. Das Bauteil 1 befindet sich vollständig in einer Lösung 3, welche MOF-Precursor und einen Linker enthält. Das Bauteil wird durch eine Temperiervorrichtung 4, hier ein Heizstab, welcher sich innerhalb des Bauteils 1 befindet, beheizt. Die Temperatur der Oberfläche des Bauteils 1 wird durch einen Temperaturfühler 5 gemessen und kann dadurch konstant gehalten werden. Es baut sich in der Lösung 3 durch das Beheizen des Bauteils 1 mit der Temperiervorrichtung 4 ein Temperaturgradient auf, wobei die Temperatur der Lösung 3 an der Oberfläche des Bauteils 1 höher ist als die der restlichen Lösung. Der sich einstellende Temperaturgradient wird verstärkt und/oder aufrechterhalten, indem die restliche Lösung 3 durch eine Kühlvorrichtung 6 gekühlt wird. Durch den Temperaturgradienten der Lösung 3 wird sichergestellt, dass nur an der Oberfläche des Bauteils 1 die Temperatur hoch genug ist, sodass sich auf der Oberfläche des Bauteils 1 eine MOF-Schicht 2 abscheiden kann.

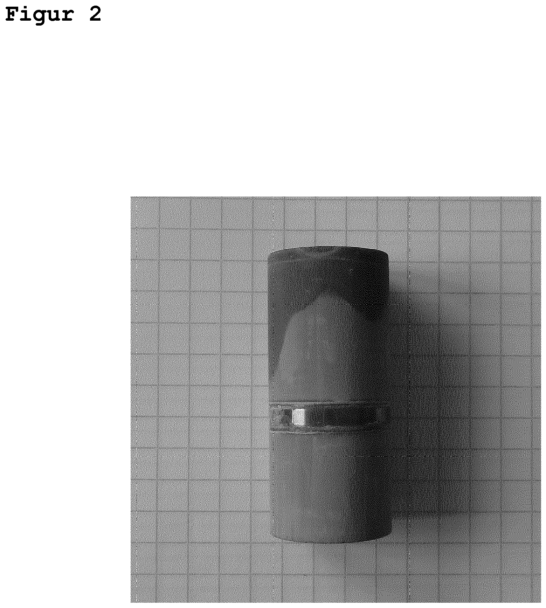

Figur 2 zeigt eine Aufnahme einer durch direkte thermische Abscheidung erzeugten MOF-Schicht auf einem Bauteil. Bei dem Bauteil handelt es sich um einen Zylinder aus Kupfer. Die MOF-Schicht wurde mit HKUST-1 erstellt. Die Seitenlänge der Karos beträgt 5 mm. Die abgeschiedene HKUST-1 MOF-Schicht auf dem Kupferzylinder ist deutlich erkennbar. Ein mit einem Kabelbinder abgedeckter Teil in der Mitte des Zylinders weist keine Beschichtung auf (Oberfläche ist blankes Kupfer).

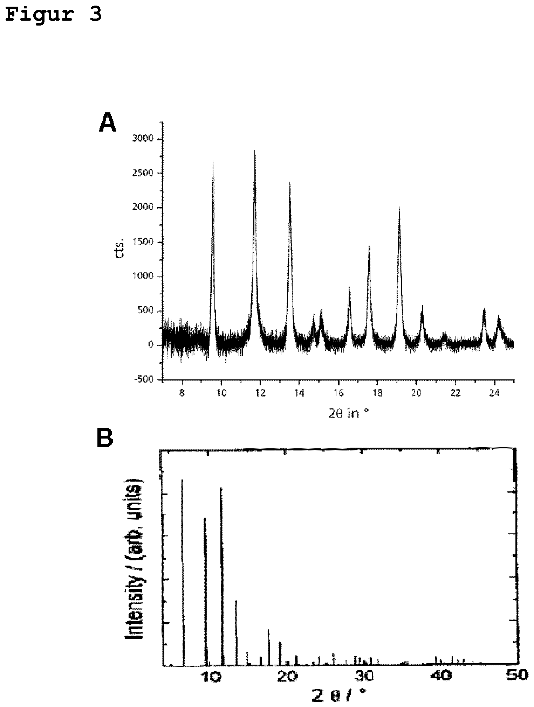

Figur 3 zeigt einen Vergleich des Röntgendiffrakto-gramms (Cu-Ka)der erzeugten HKSUT-1 MOF-Schicht (A) mit einer Simulation für HKUST-1 (B). Die Simulation stammt von Hartmann et al. (Hartmann et al., Langmuir, 24, 8634-8642). Der Vergleich demonstriert, dass als kristalline Phase ausschließlich HKUST-1 vorliegt und die Kristallite keine bevorzugte Orientierung aufweisen.

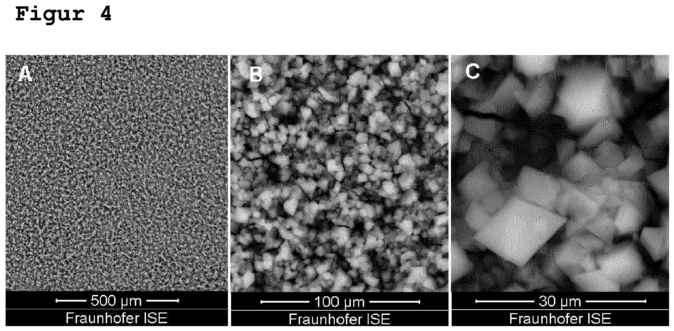

Figur 4 zeigt SEM-Aufnahmen der HKUST-1-Schicht (Cu-btc) auf dem Kupferträger. Aus den Aufnahmen geht deutlich hervor, dass die HKUST-1 MOF-Schicht Mikroporen aufweist. Dies wird besonders in den Abbildungen B und C deutlich, welche die Aufnahmen in einem Längenmaßstab von 100 µm bzw. 30 µm darstellen. Aus Abbildung C geht hervor, dass die Mikroporen einen Durchmesser aufweisen, welcher wesentlich kleiner als 30 µm, überwiegend im Bereich von ca. 5 µm, ist.

### Beispiel

Als Bauteil wurde ein Metallkörper aus Kupfer verwendet (Kupferzylinder), welche zunächst mit Aceton und verdünnter Salzsäure gereinigt wurde. Anschließend wurde das Bauteil für 24 h bei 120°C getempert, um eine gleichmäßige und reproduzierbare Oberflächenstruktur zu erhalten.

Eine Lösung von 0,84 g Trimesinsäure und 1,75 g Cu(NO₃)₃ * 3 H₂O in 30 ml DMF wurde mit 3 kg Eiswasser auf 0°C gekühlt. Dann wurde ein Kuperzylinder mit einer Heizpatrone (JEKA Micromax, D 4,5 x 40 mm, 100 W bei 24 Volt) und einem Thermoelement zur Überwachung der Oberflächentemperatur versehen und auf einer kleinen Fläche ungefähr in der Mitte des Kupferzylinders mit einem Kabelbinder abgedeckt. Anschließend wurde der Kupferzylinder mittig in die Lösung gehängt und mit einer Leistung von 50 W (18 V=; 2,8 A) für 2 Stunden beheizt (Figur 1). Dabei stellte sich eine Oberflächentemperatur von 88°C ein, die im Verlauf der Synthese der MOF-Schicht auf 96 °C anstieg.

Sofort nach Beginn konnte ein Aufhellen des Kupferkörpers beobachtet werden, was mit der Reduktion der Oxidschicht durch entstehendes Formaldehyd erklärt werden kann. 10 Minuten nach Beginn der Synthese war die Ausbildung einer dunklen Schicht, nach weiteren ca. 30 Minuten eine leichte Eintrübung der Lösung zu beobachten. 120 min. nach Beginn der Synthese wurde die Spannungsquelle abgeschaltet, der Beschichtungskörper entnommen, mit DMF abgespült, für je 12 h in DMF und redestilliertem Ethanol eingelegt und schließlich für 24 h bei 60°C an Luft getrocknet. Man erhielt einen gleichmäßig hellblau gefärbten Körper, welcher lediglich in dem abgedeckten Bereich des Kabelbinders unbeschichtet ist (Figur 2).

Die Charakterisierung der Schicht mittels Röntgenbeugung zeigt im Vergleich mit einem simulierten Diffraktogramm (siehe Hartmann et al., Langmuir, 24, 8634-8642), dass außer HKUST-1 keine weiteren kristallinen Phasen in der Schicht vorkommen (Figur 3).

Elektronenmikroskopische Aufnahmen zeigen, dass die Schicht keinen nennenswerten Anteil amorpher Substanz besitzt, sondern praktisch ausschließlich aus HKUST-1 besteht. Die zufällige Orientierung der einzelnen Kristallite ist ausgezeichnet zu erkennen. Bemerkenswert ist der gleichmäßige Aufbau der Schicht, der keine Risse oder andere Unregelmäßigkeiten aufweist (Figur 2 und Figur 4, A). Auffällig ist außerdem, dass die Kristalle nicht dicht gepackt sind (Figur 4, B). Stattdessen sind zahlreiche Makroporen von weniger als 30 µm, überwiegend ca. 5 µm, Durchmesser zu beobachten (Figur 4, C).

Die Schichtdicke der HKUST-1 MOF-Schicht wurde bestimmt, indem der Übergang vom mit Kabelbinder abgedeckten Bereich des Kupferkörpers hin zur MOF-Schicht mittels Laser-Scanning-Mikroskopie abgetastet wurde. Obschon die MOF-Oberfläche aufgrund ihrer optischen Transparenz relativ verrauscht erscheint, zeigt eine Mittelung der Z-Werte über das gezeigte Bild entlang der X-Achse, dass die Schicht eine Dicke von ca. 26 µm aufweist. Unter den gegebenen Bedingungen kann damit eine Schichtaufbaurate von 13 µm/h ermittelt werden, was ein Vielfaches aller bislang bekannten Verfahren darstellt.

Letztlich wurde die Haftung der HKUST-1 MOF-Schicht auf dem Kupferträger überprüft. Beim Abwischen des Trägers mit einem weißen Tuch konnte zwar eine Blaufärbung festgestellt werden, der Träger selbst blieb aber optisch unverändert. Selbst durch kräftiges Reiben mit einem Stoffhandschuh war es nicht möglich, den Träger von der blauen Schicht zu befreien. Die Haftung der Kristalle am Träger ist also hervorragend.

## Patentansprüche

1. Verfahren zur zumindest bereichsweisen Beschichtung eines Bauteils (1) mit einer Schicht aus einem metallorganischen Netzwerk (MOF)(2), bei dem das Bauteil (1) mit einer Lösung (3) enthaltend mindestens ein Metallsalz, mindestens einen Linker und mindestens ein Lösungsmittel in Kontakt gebracht wird,
**dadurch gekennzeichnet, dass** die Lösung (3) einen Temperaturgradienten aufweist, wobei die Temperatur der Lösung (3) unmittelbar an der Oberfläche des Bauteils (1) unter Verwendung von mindestens einem Temperaturfühler (5) auf eine Temperatur in dem Bereich von 50-200°C eingestellt wird, so dass die Kristallisation einer MOF-Schicht (2) auf der Oberfläche des Bauteils (1) ermöglicht wird, während die Temperatur der restlichen Lösung (3) 10-100 K unter der Temperatur der Oberfläche des Bauteils (1) konstant gehalten wird, so dass die Bildung von MOF-Kristallen in der restlichen Lösung (3) verhindert wird, wobei das Bauteil mittels einer Entfettung vorbehandelt wird.

2. Verfahren gemäß dem vorhergehenden Anspruch, **dadurch gekennzeichnet, dass** das Bauteil (1) ein Element aus der Gruppe bestehend aus Metall, Metalllegierung, Metalloxid, Metalloxidkeramik, Nichtmetalloxidkeramik, bevorzugt Siliziumkarbid, Gläser, Halbmetalle, Legierungshalbleiter und Silizium enthält oder daraus besteht, insbesondere Kupfer, Aluminium und/oder rostfreie Stähle, bevorzugt Stähle der Typen 1.4301 und/oder 1.4401.

3. Verfahren gemäß dem vorhergehenden Anspruch, **dadurch gekennzeichnet, dass** das Metallsalz ein
a) Metallorganisches poröses Gerüstnetzwerk (MOF) aus einem Metall und/oder Halbmetall des Periodensystems, bevorzugt ein MOF der Elemente der Gruppen 2, 3, 4, 5, 6, 7, 8, 9, 10, 11, 12, 13, 14, 15 und/oder der Lanthanoide des Periodensystems, besonders bevorzugt ein Cu-, Cr-, Al-, Fe-, Ti-, Zr- oder Zn-MOF; und/oder
b) Zeolithisches Imidazolnetzwerk (ZIF);
ausbildet.

4. Verfahren gemäß einem der vorhergehenden Ansprüche, **dadurch gekennzeichnet, dass** der Linker mindestens eine wenigstens zweizähnige organische Verbindung ist.

5. Verfahren gemäß einem der vorhergehenden Ansprüche, **dadurch gekennzeichnet, dass** der Linker mindestens eine funktionelle Gruppe enthält, die ausgewählt ist aus der Gruppe bestehend aus COOH, CS₂H, NO₂, B(OH)₂ und SO₃H.

6. Verfahren gemäß einem der vorhergehenden Ansprüche, **dadurch gekennzeichnet, dass** es sich bei dem Linker um
a) Terephthalsäure, Isophtalsäure, Hydroxyterephthalsäure, 2,5-Dihydroxyterephthalsäure, Aminoterephthalsäure, Pyridin-2,5-Dicarbonsäure, Pyrazin-2,5-dicarbonsäure, 1,3,5-Benzoltricarbonsäure, Fumarsäure und 2,3-Dihydroxyfumarsäure, sowie deren Anionen,
b) einen Stickstoff-Heterozyklus, bevorzugt ausgewählt aus der Gruppe bestehend aus Pyrazolat, Triazolat, Tetrazolat, Imidazolat, Pyrimidin, Pyridazin und Pyrazin;
c) ein aliphatisches oder aromatisches Amin; und/oder
d) ein Phosphan;
handelt.

7. Verfahren gemäß dem vorhergehenden Anspruch, **dadurch gekennzeichnet, dass** die Temperatur an der Oberfläche des Bauteils (1) über eine Temperiervorrichtung (4) eingestellt wird, wobei die Temperiervorrichtung (4) bevorzugt ein elektrisches Heizelement und/oder ein Wärmeträgerfluid enthält, welches bevorzugt das Bauteil aktiv durchströmt.

8. Verfahren gemäß einem der vorhergehenden Ansprüche, **dadurch gekennzeichnet, dass** die Temperatur an der Oberfläche des Bauteils (1), auf eine Temperatur in dem Bereich von 70-170°C, bevorzugt 88°C-150°C, eingestellt wird und/oder die die Temperatur der Lösung (3) 20-70 K, bevorzugt 30-50 K unter der Temperatur der Oberfläche des Bauteils (1) konstant gehalten wird.

9. Verfahren gemäß einem der vorhergehenden Ansprüche, **dadurch gekennzeichnet, dass** die Temperatur der restlichen Lösung (3) durch eine Kühlvorrichtung (6), bevorzugt ein Kryostat und/oder ein Eis-Wasser-Bad eingestellt wird.

10. Verfahren gemäß einem der vorhergehenden Ansprüche, **dadurch gekennzeichnet, dass** das Bauteil (1) vor dem Kontakt mit der Lösung (3) gereinigt wird, bevorzugt mit Aceton und/oder verdünnter Salzsäure,
und/oder nach der Reinigung getempert wird, bevorzugt bei einer Temperatur von 100-140°C für 12-36 Stunden, besonders bevorzugt bei einer Temperatur von 110-130°C für 20-28 Stunden und/oder vor dem Kontakt mit der Lösung (3) funktionalisiert wird, bevorzugt mit einer selbstorganisierenden Monoschicht (SAM).

11. Wärmetauscher für eine Sorptionskältemaschine oder Sorptionswärmepumpe, hergestellt nach dem Verfahren gemäß einem der Ansprüche 1-10, **dadurch gekennzeichnet, dass** die MOF-Schicht (2) eine Dicke von 5 bis 100 µm aufweist.

12. Verwendung des Wärmetauschers gemäß Anspruch 11 in einer Sorptionskältemaschine oder Sorptionswärmepumpe.

## Claims

1. Method of coating at least regions of a component (1) with a layer of a metal-organic framework (MOF) (2), in which the component (1) is contacted with a solution (3) comprising at least one metal salt, at least one linker and at least one solvent,
**characterized in that** the solution (3) has a temperature gradient, where the temperature of the solution (3) directly at the surface of the component (1), using at least one temperature sensor (5), is set to a temperature in the range of 50-200°C, so as to enable the crystallization of an MOF layer (2) on the surface of the component (1), while the temperature of the residual solution (3) is kept constant 10-100 K below the temperature of the surface of the component (1), such that the formation of MOF crystals in the residual solution (3) is prevented, where the component is pretreated by means of degreasing.

2. Method according to the preceding claim, **characterized in that** the component (1) comprises or consists of an element from the group consisting of metal, metal alloy, metal oxide, metal oxide ceramic, nonmetal oxide ceramic, preferably silicon carbide, glasses, semimetals, alloy semiconductors and silicon, especially copper, aluminium and/or stainless steels, preferably steels of the 1.4301 and/or 1.4401 types.

3. Method according to the preceding claim, **characterized in that** the metal salt forms a
a) metal-organic porous framework (MOF) composed of a metal and/or semimetal in the Periodic Table, preferably an MOF of the elements of groups 2, 3, 4, 5, 6, 7, 8, 9, 10, 11, 12, 13, 14, 15 and/or the lanthanoids of the Periodic Table, more preferably a Cu-, Cr-, Al-, Fe-, Ti-, Zr- or Zn-MOF; and/or
b) zeolitic imidazole framework (ZIF).

4. Method according to any of the preceding claims, **characterized in that** the linker is at least one at least bidentate organic compound.

5. Method according to any of the preceding claims, **characterized in that** the linker contains at least one functional group selected from the group consisting of COOH, CS₂H, NO₂, B(OH)₂ and SO₃H.

6. Method according to any of the preceding claims, **characterized in that** the linker is
a) terephthalic acid, isophthalic acid, hydroxyterephthalic acid, 2,5-dihydroxyterephthalic acid, aminoterephthalic acid, pyridine-2,5-dicarboxylic acid, pyrazine-2,5-dicarboxylic acid, benzene-1,3,5-tricarboxylic acid, fumaric acid and 2,3-dihydroxyfumaric acid, and anions thereof,
b) a nitrogen heterocycle, preferably selected from the group consisting of pyrazolate, triazolate, tetrazolate, imidazolate, pyrimidine, pyridazine and pyrazine;
c) an aliphatic or aromatic amine; and/or
d) a phosphane.

7. Method according to the preceding claim, **characterized in that** the temperature at the surface of the component (1) is adjusted by a temperature control device (4), wherein the temperature control device (4) preferably comprises an electrical heating element and/or a heat carrier fluid that preferably actively flows through the component.

8. Method according to any of the preceding claims, **characterized in that** the temperature at the surface of the component (1) is adjusted to a temperature in the range of 70-170°C, preferably 88°C-150°C, and/or the temperature of the solution (3) is kept constant 20-70 K, preferably 30-50 K, below the temperature of the surface of the component (1).

9. Method according to any of the preceding claims, **characterized in that** the temperature of the residual solution (3) is adjusted by a cooling apparatus (6), preferably a cryostat and/or an ice-water bath.

10. Method according to any of the preceding claims, **characterized in that** the component (1), before being contacted with the solution (3), is cleaned, preferably with acetone and/or dilute hydrochloric acid,
and/or is heat-treated after the cleaning, preferably at a temperature of 100-140°C for 12-36 hours, more preferably at a temperature of 110-130°C for 20-28 hours, and/or is functionalized, preferably with a self-assembly monolayer (SAM), before being contacted with the solution (3).

11. Heat exchanger for a sorption cooler or sorption heat pump, produced by the method according to any of Claims 1-10, **characterized in that** the MOF layer (2) has a thickness of 5 to 100 µm.

12. Use of the heat exchanger according to Claim 11 in a sorption cooler or sorption heat pump.

## Revendications

1. Procédé pour revêtir au moins par zones une pièce (1) avec une couche d'un réseau organométallique (MOF) (2), dans lequel on met en contact la pièce (1) avec une solution (3) contenant au moins un sel métallique, au moins un lieur et au moins un solvant,
**caractérisé en ce que** la solution (3) présente un gradient de température, la température de la solution (3) étant ajustée directement sur la surface de la pièce (1), par utilisation d'au moins un capteur de température (5), à une température comprise dans la plage de 50 à 200 °C, de façon à permettre la cristallisation d'une couche de MOF (2) sur la surface de la pièce (1), tandis que la température de la solution restante (3) est maintenue constante 10 à 100 K en-dessous de la température de la surface de la pièce (1), de façon à empêcher la formation de cristaux de MOF dans la solution résiduelle (3), la pièce étant soumise à un prétraitement avec un dégraissant.

2. Procédé selon la revendication précédente, **caractérisé en ce que** la pièce (1) contient un élément du groupe consistant en un métal, un alliage métallique, un oxyde métallique, une céramique à base d'oxydes métalliques, une céramique qui n'est pas à base d'oxydes métalliques, de préférence le carbure de silicium, les verres, les métalloïdes, les semiconducteurs à base d'alliage et le silicium, ou en est constituée, en particulier le cuivre, l'aluminium et/ou les aciers inoxydables, de préférence les aciers des types 1.4301 et/ou 1.4401.

3. Procédé selon la revendication précédente, **caractérisé en ce que** le sel métallique forme
a) un réseau organométallique poreux (MOF) en un métal et/ou un métalloïde du Tableau Périodique, de préférence du MOF des éléments des groupes 2, 3, 4, 5, 6, 7, 8, 9, 10, 11, 12, 13, 14, 15 et/ou des lanthanoïdes du Tableau Périodique, d'une manière particulièrement préférée un MOF de Cu, Cr, Al, Fe, Ti, Zr ou Zn ; et/ou
b) un réseau zéolitique à base d'imidazole (ZIF).

4. Procédé selon l'une des revendications précédentes, **caractérisé en ce que** le lieur est au moins un composé organique au moins bidenté.

5. Procédé selon l'une des revendications précédentes, **caractérisé en ce que** le lieur contient au moins un groupe fonctionnel qui est choisi dans le groupe consistant en COOH, CS₂H, NO₂, B(OH)₂ et SO₃H.

6. Procédé selon l'une des revendications précédentes, **caractérisé en ce que**, pour ce qui concerne le lieur, il s'agit
a) d'acide téréphtalique, d'acide isophtalique, d'acide hydroxytéréphtalique, d'acide 2,5-dihydroxytéréphtalique, d'acide aminotéréphtalique, d'acide pyridine-2,5-dicarboxylique, d'acide pyrazine-2,5-dicarboxylique, d'acide 1,3,5-benzènetricarboxylique, d'acide fumarique et d'acide 2,3-dihydroxyfumarique, ainsi que de leurs anions,
b) d'un hétérocycle azoté, choisi de préférence dans le groupe consistant en un pyrazolate, un triazolate, un tétrazolate, un imidazolate, la pyrimidine, la pyridazine et la pyrazine ;
c) d'une amine aliphatique ou aromatique ; et/ou
d) d'un phosphane.

7. Procédé selon la revendication précédente, **caractérisé en ce que** la température sur la surface de la pièce (1) est ajustée à l'aide d'un dispositif (4) d'équilibrage de la température, le dispositif (4) d'équilibrage de la température contenant au moins un élément chauffant électrique et/ou un fluide caloporteur, qui de préférence traverse la pièce d'une manière active.

8. Procédé selon l'une des revendications précédentes, **caractérisé en ce que** la température sur la surface de la pièce (1) est ajustée à une température comprise dans la plage de 70 à 170 °C, de préférence de 88 °C à 150 °C, et/ou la température de la solution (3) est maintenue constante 20 à 70 K, de préférence 30 à 50 K en-dessous de la température de la surface de la pièce (1).

9. Procédé selon l'une des revendications précédentes, **caractérisé en ce que** la température de la solution résiduelle (3) est ajustée à l'aide d'un dispositif de refroidissement (6), de préférence un cryostat ou un bain d'eau glacée.

10. Procédé selon l'une des revendications précédentes, **caractérisé en ce que** la pièce (1) est nettoyée avant le contact avec la solution (3), de préférence à l'aide d'acétone et/ou d'acide chlorhydrique dilué,
et/ou est portée à l'équilibre de température après le nettoyage, de préférence à une température de 100 à 140 °C pendant 12 à 36 heures, d'une manière particulièrement préférée à une température de 110 à 130 °C pendant 20 à 28 heures, et/ou est fonctionnalisée avant le contact avec la solution (3), de préférence avec une monocouche auto-assemblée (SAM).

11. Echangeur de chaleur pour une machine frigorifique à sorption ou une pompe à chaleur à sorption, fabriqué par le procédé selon l'une des revendications 1 à 10, **caractérisé en ce que** la couche de MOF (2) présente une épaisseur de 5 à 100 µm.

12. Utilisation de l'échangeur de chaleur selon la revendication 11 dans une machine frigorifique à sorption ou une pompe à chaleur à sorption.
